# EUROPÄISCHE PATENTSCHRIFT

(11) **EP 3 210 505 B1**
(45) Veröffentlichungstag und Bekanntmachung des Hinweises auf die Patenterteilung: **08.04.2020**
(21) Anmeldenummer: 16156809.2
(22) Anmeldetag: 23.02.2016
(51) Int. Cl.: A47J 31/44

(54) **ERHITZEREINHEIT FÜR EINE VORRICHTUNG ZUR ERHITZUNG UND/ODER AUFSCHÄUMUNG VON MILCH**
BOILER UNIT FOR A DEVICE FOR HEATING AND/OR FROTHING OF MILK
RÉCHAUFFEUR POUR UN DISPOSITIF DE RÉCHAUFFEMENT ET/OU DE MOUSSAGE DE LAIT

(43) Veröffentlichungstag der Anmeldung: 30.08.2017
(73) Patentinhaber: Eversys Holding SA, 1957 Ardon (CH)
(72) Erfinder: LOCHER, Grégoire, 1976 Daillon (CH)
(74) Vertreter: Charrier Rapp & Liebau

(56) Entgegenhaltungen:
- EP-A1- 0 344 859
- EP-A1- 2 540 200
- CN-Y- 201 223 297
- FR-A1- 2 638 083

## Beschreibung

Die Erfindung betrifft eine Erhitzereinheit für eine Vorrichtung zur Erhitzung und/oder Aufschäumung von Milch nach dem Oberbegriff des Anspruchs 1 sowie eine Vorrichtung und ein Verfahren zur Erhitzung und/oder Aufschäumung von Milch mit einer solchen Erhitzereinheit.

Derartige Erhitzereinheiten können beispielsweise in Getränkeautomaten wie Kaffevollautomaten mit einer Vorrichtung zur Erhitzung und Aufschäumung von Milch eingesetzt werden, um Milch zur Herstellung von Kaffee-, Milch- und Milchschaumgetränken zu erhitzen und aufzuschäumen. In Kaffeevollautomaten können mit der erhitzten und aufgeschäumten Milch beispielsweise Milch- oder Milchmischgetränke wie Kakao, Milchkaffee oder Capuccino zubereitet werden.

Aus dem Stand der Technik sind Vorrichtungen zur Erhitzung und Aufschäumung von Milch bekannt, welche mit einem Venturisystem ausgestattet sind, wie z.B. in der EP 0 234 236 B1 und der EP 0 344 859 B1 beschrieben. In diesen Vorrichtungen wird heißer Dampf sowohl als Heiz- als auch als Treibmedium zur Erhitzung und Förderung von Milch verwendet. Die mit einem Venturisystem ausgestatteten Vorrichtungen weisen allerdings eine geringe Heizleistung und nur eine beschränkte Regelbarkeit der Produkteigenschaften, wie z.B. der Temperatur der erhitzten Milch oder der Porösität des Milchschaums auf.

Aus der EP 0344859 A1 ist eine Vorrichtung zum Erhitzen und Aufschäumen von Milch bekannt, die über einen im wesentlichen zylindrischen Körper verfügt, der über eine Dampfleitung an eine Dampfquelle angeschlossen ist und ein erste Düse enthält, aus der der Dampf in eine Kammer des zylindrischen Körpers strömt, wobei in die Kammer eine Milchleitung mündet, über welche Milch in die Kammer geleitet werden kann. Innerhalb des zylindrischen Körpers ist stromabwärts der Mündung der Milchleitung ein Einsatz mit einem Ablaufkanal mit einer Engstelle und einer zweiten Düse am Ende des Ablaufkanals angeordnet, wobei zwischen dem Außenumfang des Einsatzes und dem zylindrischen Körper eine Kammer ausgebildet ist, die über eine oder mehrere Öffnungen zur Umgebung und mindestens eine weitere Öffnung zur zweiten Düse sowie eine Auslassöffnung, durch welche die erhitzte und aufgeschäumte Milch entnommen werden kann, verfügt.

Eine verbesserte Vorrichtung zur Erhitzung und/oder Aufschäumung von Milch ist aus der WO 2013/064232 A1 bekannt. Diese Vorrichtung enthält eine Erhitzereinheit zum Erhitzen der Milch mit Dampf, wobei in der als Injektor arbeitenden Erhitzereinheit heißer Dampf als Wärmeträger in die Milch eingeleitet wird. Die Erhitzereinheit umfasst einen inneren Durchführungskanal für den heißen Dampf und einen ihn koaxial umgebenden Durchführungskanal für die Milch bzw. den Milchschaum, wobei die beiden Durchführungskanäle durch mehrere quer zur Stromrichtung verlaufende Radialkanäle miteinander verbunden sind. Diese Erhitzereinheit ermöglicht eine separate Zufuhr der Milch und des heißen Dampfs, wodurch eine von der Erhitzung unabhängige Aufschäumung der Milch zu einem Milchschaum ermöglicht wird. Dadurch können die Eigenschaften sowie die Zusammensetzung des Milchschaums unabhängig vom Erhitzungsvorgang geregelt werden. Die auf dem Prinzip der Dampfinjektion basierende Erhitzung der Milch bewirkt weiterhin, dass der Erhitzungsvorgang die Qualität des Milchschaums nicht beeinträchtigt, da durch die separate Dampfzufuhr eine genaue Temperaturregelung der erhitzten Milch sichergestellt und die thermische Trägheit des Zubereitungssystems minimiert werden kann.

Es hat sich allerdings gezeigt, dass es in der aus der WO 2013/064232 A1 bekannten Erhitzereinheit zu Ablagerungen von Milchstein bzw. Milchverkrustungen und Kalk in den dünnen Radialkanälen kommen kann, welche den inneren Durchführungskanal für den Dampf mit dem äußeren Durchführungskanal für die Milch verbinden. Solche Ablagerungen und Verkrustungen in den Radialkanälen können bei einer starken Erhitzung der Milch während oder nach der Heizphase entstehen und führen zu einer Verengung der Radialkanäle und dadurch zu einer Verringerung der Heizleistung bzw. der Effizienz der Erhitzereinheit. Das Entfernen der Ablagerungen und der Verkrustungen in den engen Radialkanälen ist sehr umständlich und zeitaufwendig.

Die der Erfindung zugrundeliegende Aufgabe besteht darin, eine gattungsgemäße Erhitzereinheit für eine Vorrichtung zur Erhitzung und/oder Aufschäumung von Milch so weiterzubilden, dass die Heizleistung bzw. die Effizienz der Erhitzereinheit verbessert wird. Weiterhin soll der Wartungsaufwand für eine gattungsgemäße Erhitzereinheit reduziert werden.

Diese Aufgaben werden mit einer Erhitzereinheit mit den Merkmalen des Anspruchs 1 sowie mit einem Verfahren zur Erhitzung und/oder Aufschäumung von Milch mit den Merkmalen des Anspruchs 14 gelöst.

In der erfindungsgemäßen Erhitzereinheit wird heißer Dampf oder ein Dampf-Luftgemisch als Wärmeträger in die Milch eingeleitet, um die Milch zu erhitzen und/oder aufzuschäumen, wobei die Erhitzereinheit einen inneren Dampfkanal und einen ihn koaxial umgebenden äußeren Ringkanal für die Milch aufweist und an einem stromaufwärtigen Ende des Dampfkanals der heiße Dampf oder das Dampf-Luftgemisch und an einem stromaufwärtigen Ende des Ringkanals (kalte) Milch zugeführt wird. Erfindungsgemäß münden dabei der Dampfkanal und der Ringkanal jeweils an ihrem stromabwärtigen Ende in einen Ablaufkanal zur Abführung der durch den Dampf bzw. das Dampfluftgemisch erhitzten Milch bzw. zur Abführung des erzeugten Milchschaums, wobei in dem Ablaufkanal ein Temperatursensor zur Erfassung der Temperatur der erhitzten und/oder der aufgeschäumten Milch angeordnet ist. Der Dampfkanal und der Ringkanal für die Milch sind dabei außer an ihrem stromabwärtigen Ende voneinander getrennt.

Dadurch kann auf die Ausbildung von quer zur Strömungsrichtung des Dampfkanals und des Ringkanals verlaufende Radialkanäle, welche den inneren Dampfkanal und den koaxial dazu angeordneten äußeren Ringkanal für die Milch miteinander verbinden, verzichtet werden. Die Gefahr, dass sich in den schmalen Radialkanälen Milchstein bzw. Verkrustungen von Milch oder Kalk ablagern, wird dadurch eliminiert.

Zweckmäßig sind der innere Dampfkanal, der ihn koaxial umgebende äußere Ringkanal und der Ablaufkanal jeweils in einem Reaktorblock aus Kunststoff ausgeformt. Als Kunststoffmaterialien für den Reaktorblock kommen hochtemperaturbeständige thermoplastische Kunststoffe wie Polyetheretherketon (PEEK), Polysulfon (PSU) oder Polyetherimid (PEI) in Betracht. Der Kunststoff des Reaktorblocks, der bis ca. 150°C temperaturbeständig und lebensmittelverträglich bzw. lebensmittelkonform sein sollte, soll eine Wärmeleitung weitgehend vermeiden, wodurch die Effizienz der Erhitzereinheit weiter verbessert wird.

Zweckmäßig verläuft der innere Dampfkanal in dem Reaktorblock in einer axialen Richtung, wobei das stromaufwärtige Ende des Dampfkanals mit einer an den Reaktorblock anschließbaren Dampfleitung verbindbar ist und der über die Dampfleitung eingeleitete Dampf oder das Dampf-Luftgemisch in dem Dampfkanal vertikal entgegen der Schwerkraft von unten nach oben zum stromabwärtigen Ende des Dampfkanals und von dort in den Ablaufkanal strömt.

Am stromabwärtigen Ende des inneren Dampfkanals mündet dieser direkt in den sich vom stromabwärtigen Ende des Dampfkanals koaxial fortsetzenden Ablaufkanal, wobei der Durchmesser des Ablaufkanals größer als der Durchmesser des Dampfkanals ausgebildet ist. An der Mündung des inneren Dampfkanals in den koaxial sich daran fortsetzenden Ablaufkanal mündet auch das stromabwärtige Ende des äußeren Ringkanals für die Milch in den Ablaufkanal. Hierfür weist der äußere Ringkanal im Bereich seines stromabwärtigen Endes einen konischen Abschnitt auf. Dieser konische Abschnitt des äußeren Ringkanals weist dabei einen Außendurchmesser auf, der sich in Strömungsrichtung von dem Außendurchmesser des äußeren Ringkanals in konischer Form auf einen Außendurchmesser reduziert, der dem Außendurchmesser des Ablaufkanals entspricht, in den das stromabwärtige Ende des konischen Abschnitts des äußeren Ringkanals mündet. Durch diese Ausbildung und Einmündung des äußeren Ringkanals für die Milch und des inneren Dampfkanals in den Ablaufkanal wird eine effiziente und gleichmäßige Vermischung des heißen Dampfs bzw. des Dampf-Luftgemischs aus dem inneren Dampfkanal mit der Milch aus dem äußeren Ringkanal im Bereich der Mündung gewährleistet. Eine weitere und gleichmäßige Vermischung des Dampfs bzw. des Dampf-Luftgemischs mit der Milch erfolgt im weiteren stromabwärtigen Verlauf des Ablaufkanals. Am stromabwärtigen Ende des Ablaufkanals ist dieser zweckmäßig mit einer Ablaufleitung zur Abführung der erhitzten Milch bzw. des aufgeschäumten Milchschaums verbunden. Hierfür ist zweckmäßig in dem Reaktorblock an einer Stirnseite eine stirnseitige Öffnung mit einem Anschlussstutzen zum Anschluss der Ablaufleitung vorgesehen.

Zur Zuführung des heißen Dampfs bzw. des Dampfluftgemischs in den Dampfkanal ist an der anderen Stirnseite des Reaktorblocks ebenfalls eine stirnseitige Öffnung vorgesehen, in der zweckmäßig ein Anschlussstutzen zum Anschluss einer Dampfzufuhrleitung angeordnet ist. Die Dampfzufuhrleitung wird an einen Dampferzeuger angeschlossen, der den inneren Dampfkanal der Erhitzereinheit über die Dampfzufuhrleitung mit heißem Dampf beaufschlagt.

Bevorzugt ist die Dampfzufuhrleitung zur Erzeugung eines Dampf-Luftgemischs sowohl mit einem Dampferzeuger als auch mit einer Druckgasquelle verbunden, wobei der Dampferzeuger die Dampfzufuhrleitung mit Dampf beaufschlagt und die Druckgasquelle ein unter Druck stehendes Gas, insbesondere Druckluft, in die Dampfzufuhrleitung einleitet. Durch die gleichzeitige Einleitung von Dampf und eines unter Druck stehenden Gases, insbesondere Druckluft, kann die Milch in der Erhitzereinheit erhitzt und gleichzeitig aufgeschäumt werden.

Eine besonders große Flexibilität in Bezug auf die Eigenschaften des gebildeten Milchschaums, wie z.B. seine Konsistenz, Cremigkeit, Porosität, Schaumdichte, und Schaumstabilität (Drainage), kann dabei erzielt werden, wenn die Druckgasquelle Druckpulse erzeugt und periodisch in die Dampfzufuhrleitung einleitet. Zweckmäßig können dabei die Parameter der von der Druckgasquelle erzeugten Druckpulse, wie Amplitude, Pulsdauer und Wiederholrate (Pulsfrequenz), verändert und von einem Bediener an der Vorrichtung, beispielsweise mittels Schalt- oder Drehknöpfen, eingestellt werden. Durch das Einleiten von Dampf und der Druckpulse von komprimiertem Gas wird in der Dampfzufuhrleitung ein Dampf-Gasgemisch, insbesondere ein Dampf-Luftgemisch, erzeugt und über die Dampfzufuhrleitung in den Dampfkanal der Erhitzereinheit und von dort in deren Ablaufkanal geleitet, wo das Dampf-Gasgemisch mit der Milch vermischt wird um diese zu erhitzen und aufzuschäumen. Die Konsistenz des dabei erzeugten Milchschaums, insbesondere das Verhältnis von Schaum zu Flüssigkeit, sowie weitere Parameter des Schaums wie z.B. seine Cremigkeit, Porosität, Schaumdichte und die Schaumstabilität (Drainage), sind dabei von den ausgewählten Parametern der Druckpulse des komprimierten Gases abhängig und können durch Auswählen geeigneter Parameter der Druckpulse beeinflusst werden. Ein Bediener der Vorrichtung kann deshalb durch Änderung der Parameter der Druckpulse vor und auch noch während des Aufschäumvorgangs die Eigenschaften des Schaums beeinflussen. So kann beispielsweise auch noch während des Aufschäumvorgangs die Wiederholrate (Pulsfrequenz) der periodisch in die Dampfzufuhrleitung eingeleiteten Druckpulse verändert werden. Durch eine Änderung der Pulsfrequenz der Druckpulse wird die Konsistenz des in der Milch erzeugten Schaums beeinflusst.

Auf diese Weise ist es beispielsweise möglich, über einen an der Vorrichtung vorgesehenen Drehregler die Pulsfrequenz stufenlos zwischen einem Minimalwert und einem Maximalwert einzustellen und dadurch die Konsistenz des erzeugten Milchschaums in vorgegebenen Grenzen zwischen fein und grob auszuwählen. Auf diese Weise wird es mit einer Vorrichtung mit einer erfindungsgemäßen Erhitzereinheit möglich, Milchschaum beliebiger Konsistenz zu erzeugen, wobei auch noch während des Aufschäumvorgangs (in gewissem Umfang) die erzeugte Schaumkonsistenz angepasst werden kann.

Zur Zuführung von Milch in die Erhitzereinheit ist in dem Reaktorblock im Bereich des stromaufwärtigen Endes des äußeren Ringkanals eine quer oder schräg zur Längsachse des Ringkanals verlaufende Radialbohrung ausgeformt. In dieser Radialbohrung ist ein Anschlussstutzen zum Anschließen einer Milchleitung angeordnet. Ein Ende der Milchleitung wird über diesen Anschlussstutzen mit der Radialbohrung in dem Reaktorblock verbunden und das andere Ende der Milchleitung mündet in einen Milchbehälter. Das in den Milchbehälter mündende Ende der Milchleitung kann dabei beispielsweise als Tauchrohr ausgebildet sein, welches in einen mit Milch gefüllten Behälter eingetaucht wird. Zum Ansaugen der Milch aus dem Milchbehälter ist in der Milchleitung eine Pumpe angeordnet. Die Pumpe saugt die Milch aus dem Milchbehälter an und fördert die angesaugte Milch über die Milchleitung und die Radialbohrung in dem Reaktorblock in den äußeren Ringkanal, um diesen mit Milch zu versorgen.

Eine besonders effiziente Einleitung der Milch in den äußeren Ringkanal kann dadurch gewährleistet werden, dass die Radialbohrung tangential in den Ringkanal mündet. Dadurch können Verwirbelungen beim Einströmen der Milch in den äußeren Ringkanal verhindert werden.

Diese und weitere Vorteile und Merkmale der Erfindung ergeben sich aus dem nachfolgend unter Bezugnahme auf die begleitenden Zeichnungen näher beschriebenen Ausführungsbeispiel. Die Zeichnungen zeigen:
- **Figur 1:**: Längsschnitt durch eine erfindungsgemäße Erhitzereinheit;
- **Figur 2:**: Querschnitt durch die Erhitzereinheit von Figur 1 längs der Ebene B-B;
- **Figur 3:**: Längsschnitt durch die Erhitzereinheit von Figur 1 längs der Ebene A-A;
- **Figur 4:**: Schematische Darstellung einer Vorrichtung zur Erhitzung und/oder Aufschäumung von Milch mit einer erfindungsgemäßen Erhitzereinheit.

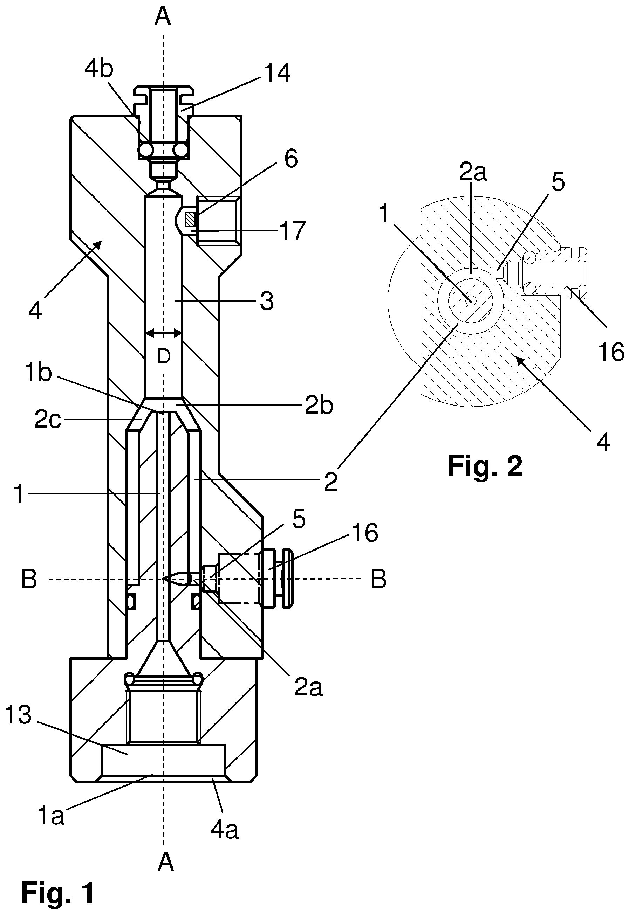

Die in den Figuren 1 - 3 gezeigte Erhitzereinheit gemäß der Erfindung umfasst einen Reaktorblock 4 aus Kunststoff, insbesondere PEEK, PSU oder PEI, der im Wesentlichen die Form eines Zylinders mit einer Mittellängsachse A aufweist. In dem Reaktorblock 4 sind ein innerer Dampfkanal 1, ein den inneren Dampfkanal koaxial umgebender äußerer Ringkanal 2 und ein koaxial zum Dampfkanal 1 angeordneter Ablaufkanal 3 ausgeformt. Der Dampfkanal 1 weist ein stromaufwärtiges Ende 1a auf, welches durch eine stirnseitige Öffnung 4a in dem Reaktorblock 4 gebildet ist. Weiterhin weist der innere Dampfkanal 1 ein stromabwärtiges Ende 1b auf, welches in den sich koaxial an den Dampfkanal 1 in stromabwärtiger Richtung fortsetzenden Ablaufkanal 3 mündet. Der Ablaufkanal 3 endet an einer stirnseitigen Öffnung 4b in dem Reaktorblock 4. Der Durchmesser des Ablaufkanals 3 ist dabei größer als der Durchmesser des Dampfkanals 1, bspw. doppelt so groß.

Im Bereich des stromaufwärtigen Endes 1a ist in dem Dampfkanal 1 ein Anschlussstutzen 13 angeordnet. Über diesen Anschlussstutzen 13 kann der innere Dampfkanal 1 mit einer in den Figuren 1 - 3 nicht dargestellten Dampfzufuhrleitung zur Einleitung von heißem Dampf oder eines Dampf-Luftgemisches verbunden werden. Am stromabwärtigen Ende des Ablaufkanals 3 ist ein weiterer Anschlussstutzen 14 zum Anschluss einer Ablaufleitung 15 vorgesehen.

Der den inneren Dampfkanal 1 koaxial umgebende äußere Ringkanal 2 weist ebenfalls ein stromaufwärtiges Ende 2a und ein stromabwärtiges Ende 2b auf. Am stromaufwärtigen Ende 2a ist der äußere Ringkanal 2 mit einer Radialbohrung 5 in dem Reaktorblock 4 verbunden (wie in Figur 2 gezeigt). Wie aus Figur 2 ersichtlich, mündet die Radialbohrung 5 an dessen stromaufwärtigem Ende 2a tangential in den Ringkanal 2. In der Radialbohrung 5 ist ein weiterer Anschlussstutzen 16 angeordnet. Über diesen Anschlussstutzen 16 kann die Radialbohrung 5 mit einer (in den Figuren 1 - 3 nicht gezeigten) Milchleitung verbunden werden. Über diese Milchleitung kann (kalte) Milch in die Radialbohrung 5 und von dort in den äußeren Ringkanal 2 eingeleitet werden.

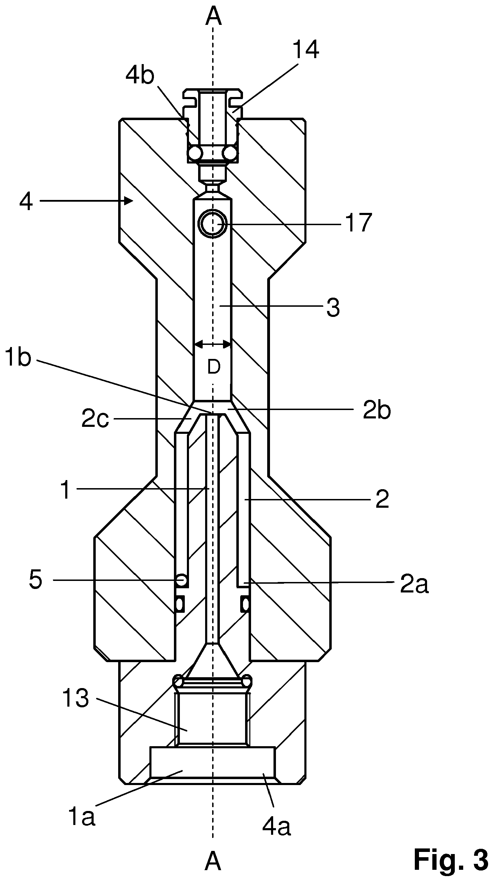

Wie aus den Figuren 1 und 3 ersichtlich, weist der äußere Ringkanal 2 im Bereich seines stromabwärtigen Endes 2b einen konischen Abschnitt 2c auf. In diesem konischen Abschnitt 2c reduziert sich der Außendurchmesser des Ringkanals 2 in konischer Form - bei gleichbleibendem Kanaldruchmesser - auf den Durchmesser D des Ablaufkanals 3. Das stromabwärtige Ende 2b des äußeren Ringkanals 2, an dem der konische Abschnitt 2c einen Außendurchmesser aufweist, der dem Durchmesser D des Ablaufkanals 3 entspricht, mündet der Ringkanal 2 in den Ablaufkanal 3. Im Mündungsbereich, in dem sowohl der innere Dampfkanal 1 als auch der äußere Ringkanal 2 in den Ablaufkanal 3 münden, erfolgt eine Vermischung des durch den Dampfkanal 1 zugeführten Dampfs bzw. des Dampf-Luftgemischs mit der durch den äußeren Ringkanal 2 zugeführten Milch. Durch die Vermischung des heißen Dampfs bzw. des Dampf-Luftgemisches mit der Milch wird die Milch erhitzt und - bei Verwendung eines Dampf-Luftgemisches - zu einem Milchschaum aufgeschäumt.

Zur Erfassung der Temperatur der erhitzten oder aufgeschäumten Milch ist im stromabwärtigen Bereich des Ablaufkanals 3 ein Temperatursensor 6 vorgesehen. Der Temperatursensor 6 ist in einer in den Ablaufkanal 3 mündenden Radialbohrung 17 angeordnet.

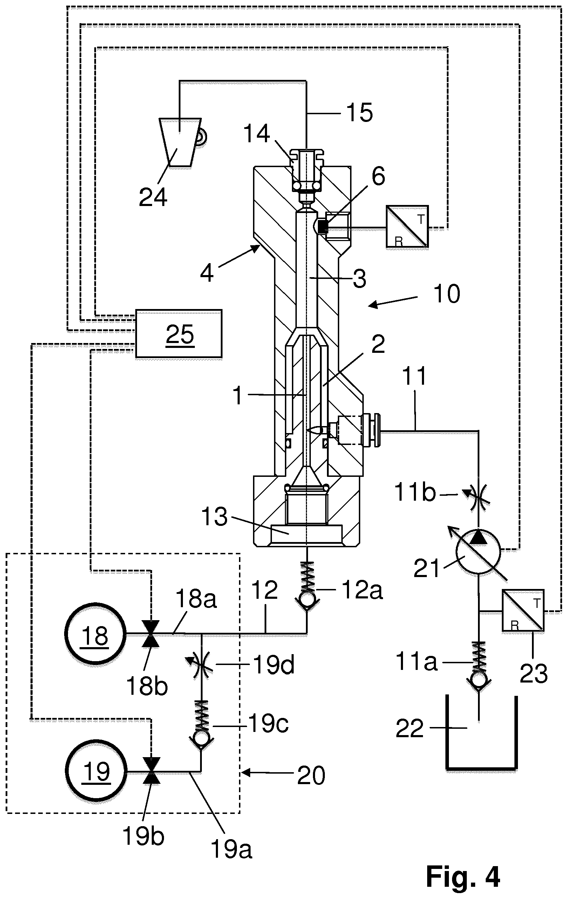

In Figur 4 ist schematisch eine Vorrichtung zur Erhitzung und Aufschäumung von Milch mit einer erfindungsgemäßen Erhitzereinheit 10 gezeigt. Darin ist das stromaufwärtige Ende 1a des Dampfkanals 1 mit einer Dampfzufuhrleitung 12 verbunden. Die Dampfzufuhrleitung 12, in der ein Rückschlagventil 12a angeordnet ist, verbindet die Erhitzereinheit 10 mit einer Einrichtung 20 zur Erzeugung eines Dampf-Luftgemischs. Die Einrichtung 20 zur Erzeugung des Dampf-Luftgemischs umfasst einen Dampferzeuger 18 und eine Druckgasquelle 19. Der Dampferzeuger 18 ist dabei über eine Dampfleitung 18a mit der Dampfzufuhrleitung 12 verbunden und die Druckgasquelle 19 ist über eine Druckgasleitung 19a mit der Dampfzufuhrleitung 12 verbunden. In der Druckgasleitung 19a sind ein elektrisch steuerbares Schaltventil (bspw. ein Magnetventil) 19b, ein Rückschlagventil 19c und ein regelbares Drosselventil 19d vorgesehen. In der Dampfleitung 18a ist ebenfalls ein elektrisch steuerbares Schaltventil (bspw. ein Magnetventil) 18b angeordnet.

Das stromaufwärtige Ende 2a des Ringkanals 2 der erfindungsgemäßen Erhitzereinheit 10 ist in der Vorrichtung von Figur 4 mit einer Milchleitung 11 verbunden. Ein freies Ende der Milchleitung 11 ist als Tauchrohr ausgebildet und in einem Behälter 22 mit kalter Milch eingetaucht. In der Milchleitung 11 ist ein Rückschlagventil 11a, eine Pumpe 21 und ein regelbares Drosselventil 11b vorgesehen. Mittels der Pumpe 21 kann kalte Milch aus dem Behälter 22 über das Tauchrohr in die Milchleitung 11 angesaugt und von dort in den Ringkanal 2 der Erhitzereinheit 10 gefördert werden. Zur Erfassung der Temperatur der angesaugten Milch ist in der Milchleitung 11 zweckmäßig ein Temperatursensor 23 vorgesehen.

An das stromabwärtige Ende des Ablaufkanals 3 der Erhitzereinheit 10 ist eine Ablaufleitung 15 angeschlossen. Ein freies Ende der Ablaufleitung 15 mündet in ein Gefäß 24. Das in der Erhitzereinheit 10 erzeugte Produkt, bei dem es sich in dem Ausführungsbeispiel der Figur 4 um Milchschaum handelt, wird über die Ablaufleitung 15 in das Gefäß 24 gefördert.

Zur Steuerung der Vorrichtung ist eine Steuereinheit 25 vorgesehen. Die Steuereinheit 25 ist mit den Temperatursensoren 6 und 23 gekoppelt, mit denen die Temperatur der kalten Milch bzw. des erzeugten Produkts (erhitzte Milch bzw. Milchschaum) erfasst werden. Weiterhin ist die Steuereinrichtung 25 zur Steuerung der Ventile 18b und 19b in der Dampfleitung 18a bzw. der Druckgasleitung 19a eingerichtet, um diese Ventile zu öffnen und zu schließen. Die Steuereinrichtung 25 dient weiterhin zur Steuerung der Pumpe 21 in der Milchleitung 11.

In einem bevorzugten Ausführungsbeispiel der in Figur 4 gezeigten Vorrichtung erzeugt die Druckgasquelle 19 Druckpulse von komprimiertem Gas. Die Druckgasquelle 19 enthält hierfür einen Kompressor, der ein Gas, insbesondere Luft, zu einem Druckgas (Druckluft) komprimiert. Die Druckgasquelle 19 ist dabei zweckmäßig so eingerichtet, dass sie mit einer vorgebbaren Frequenz periodische Druckpulse des komprimierten Gases über die Druckgasleitung 19a in die Dampfzufuhrleitung 12 einleiten kann. Zweckmäßig ist die Druckgasquelle 19 pulsweitenmoduliert ansteuerbar. Die Ansteuerung erfolgt dabei über die Steuereinrichtung 25.

Die Druckpulse der Druckgasquelle 19 werden bevorzugt periodisch mit einer einstellbaren Frequenz über die Druckgasleitung 19a durch das regelbare Drosselventil 19d in die Dampfzufuhrleitung 12 eingeleitet. In der Dampfzufuhrleitung 12 vermischen sich die Pulse des Druckgases (insbesondere Druckluft) mit dem von der Dampfquelle 19 über die Dampfleitung 18a in die Dampfzufuhrleitung 12 eingeleiteten heißen Dampf und erzeugen in der Dampfzufuhrleitung 12 ein gepulstes Dampf-Luftgemisch. Das gepulste Dampf-Luftgemisch wird über die Dampfzufuhrleitung 12 in den inneren Dampfkanal 1 der Erhitzereinheit 10 eingeleitet und strömt von dort in den Ablaufkanal 3. In dem Ablaufkanal 3 vermischen sich die Pulse des Dampf-Luftgemischs mit der über den äußeren Ringkanal 2 in die Erhitzereinheit 10 eingeleiteten kalten Milch, wodurch die Milch erhitzt und zu einem Milchschaum aufgeschäumt wird. Das so erzeugte Produkt (Milchschaum) wird über den Ablaufkanal 3 in die Ablaufleitung 15 und von dort in das Gefäß 24 gefördert.

Durch Einstellung der Parameter der von der Druckgasquelle 19 erzeugten Druckpulse, wie deren Frequenz und Amplitude, kann die Zusammensetzung des in der Erhitzereinheit 10 erzeugten Milchschaums beeinflusst und eingestellt werden. Zur Einstellung gewünschter Werte der Frequenz und der Amplitude der Druckpulse verfügt die Steuereinrichtung 25 über Einstellmittel, beispielsweise einen Drehregler oder Druckknöpfe, mit denen die Frequenz und/oder die Amplitude der Druckpulse zweckmäßig stufenlos zwischen einem Minimalwert und einem Maximalwert einstellbar ist. Die Amplitude der Druckpulse kann bspw. über die Leistung des Kompressors der Druckgasquelle 19 oder über die Stellung des regelbaren Drosselventils 19d geregelt werden.

Die Konsistenz des erzeugten Milchschaums, insbesondere das Verhältnis von Schaum zu Flüssigkeit, sowie weitere Parameter des Schaums wie z.B. seine Cremigkeit, Porosität, Schaumdichte und die Schaumstabilität (Drainage), können damit durch Auswählen geeigneter Parameter der Druckpulse beeinflusst werden. Ein Bediener der Vorrichtung kann damit durch Änderung der Parameter der Druckpulse vor und auch noch während des Aufschäumvorgangs die Eigenschaften des Schaums beeinflussen. So kann beispielsweise auch noch während des Aufschäumvorgangs die Wiederholrate (Pulsfrequenz) der periodisch in die Dampfzufuhrleitung 12 eingeleiteten Druckpulse verändert werden. Auf diese Weise ist es beispielsweise möglich, über einen an der Vorrichtung vorgesehenen Drehregler die Pulsfrequenz stufenlos zwischen einem Minimalwert und einem Maximalwert einzustellen und dadurch die Konsistenz des erzeugten Schaums in vorgegebenen Grenzen zwischen fein und grob auszuwählen.

## Patentansprüche

1. Erhitzereinheit für eine Vorrichtung zur Erhitzung und/oder Aufschäumung von Milch, in der Dampf oder ein Dampf-Luftgemisch als Wärmeträger in die Milch eingeleitet wird, wobei die Erhitzereinheit einen inneren Dampfkanal (1) und einen ihn koaxial umgebenden äußeren Ringkanal (2) für die Milch aufweist, wobei an einem stromaufwärtigen Ende (1a) des Dampfkanals (1) heißer Dampf oder ein Dampf-Luftgemisch und an einem stromaufwärtigen Ende (2a) des Ringkanals (2) Milch zugeführt wird, wobei der Dampfkanal (1) und der Ringkanal (2) jeweils an ihrem stromabwärtigen Ende (1b, 2b) in einen Ablaufkanal (3) zur Abführung der erhitzten und/oder aufgeschäumten Milch münden, **dadurch gekennzeichnet, dass** in dem Ablaufkanal (3) ein Temperatursensor (6) zur Erfassung der Temperatur der erhitzten und/oder der aufgeschäumten Milch angeordnet ist.

2. Erhitzereinheit nach Anspruch 1, **dadurch gekennzeichnet, dass** der Dampfkanal (1), der Ringkanal (2) und der Ablaufkanal (3) in einem Reaktorblock (4) aus Kunststoff ausgeformt sind.

3. Erhitzereinheit nach Anspruch 2, **dadurch gekennzeichnet, dass** der Dampfkanal (1) in axialer Richtung in dem Reaktorblock (4) verläuft, wobei das stromaufwärtige Ende (1a) des Dampfkanals (1) mit einer Dampfleitung verbindbar ist und der über die Dampfleitung eingeleitete Dampf oder das über die Dampfleitung eingeleitete Dampf-Luftgemisch in dem Dampfkanal (1) vertikal entgegen der Schwerkraft von unten nach oben zum stromabwärtigen Ende (1b) des Dampfkanals (1) strömt.

4. Erhitzereinheit nach Anspruch 2 oder 3, **dadurch gekennzeichnet, dass** der Reaktorblock (4) zumindest im Wesentlichen zylindrisch mit einer Mittellängsachse (A) ausgebildet ist, wobei der Dampfkanal (1) und der Ablaufkanal (3) entlang der Mittellängsachse (A) des Reaktorblocks (4) verlaufen, der Ringkanal (2) koaxial zur Mittellängsachse (A) des Reaktorblocks (4) angeordnet ist und das stromaufwärtige Ende (1a) des Dampfkanals (1) durch eine stirnseitige Öffnung (4a) in dem Reaktorblock (4) gebildet ist.

5. Erhitzereinheit nach einem der voranstehenden Ansprüche, **dadurch gekennzeichnet, dass** der Ringkanal (2) an seinem stromaufwärtigen Ende (2a) mit einer quer oder schräg zur Längsachse des Ringkanals (2) verlaufenden Radialbohrung (5) in dem Reaktorblock (4) verbunden ist, wobei die Radialbohrung (5) mit einer Milchleitung verbindbar ist.

6. Erhitzereinheit nach Anspruch 5, **dadurch gekennzeichnet, dass** die Radialbohrung (5) tangential in den Ringkanal (2) mündet.

7. Erhitzereinheit nach einem der voranstehenden Ansprüche, **dadurch gekennzeichnet, dass** sich der Ringkanal (2) an seinem stromabwärtigen Ende (2b) einen konischen Abschnitt (2c) aufweist, der in den Ablaufkanal (3) mündet.

8. Erhitzereinheit nach Anspruch 7, **dadurch gekennzeichnet, dass** der konische Abschnitt (2c) des Ringkanals (2) in stromabwärtiger Richtung in den rohrförmig ausgebildeten Ablaufkanal (3) übergeht.

9. Erhitzereinheit nach einem der Ansprüche 2 bis 8, **gekennzeichnet durch** eine stirnseitige Öffnung (4b) am oberen Ende des Reaktorblocks (4), welche einen Auslass zur Abführung der erhitzten und/oder aufgeschäumten Milch aus dem Ablaufkanal (3) bildet.

10. Erhitzereinheit nach einem der voranstehenden Ansprüche, **dadurch gekennzeichnet, dass** der Dampfkanal (1) und der Ringkanal (2) außer an ihrem stromabwärtigen Ende (1b, 2b) voneinander getrennt sind.

11. Vorrichtung zur Erhitzung und/oder Aufschäumung von Milch mit einer Erhitzereinheit nach einem der voranstehenden Ansprüche, wobei das stromaufwärtige Ende (1a) des Dampfkanals (1) mit einer Dampfzufuhrleitung (12) und das stromaufwärtige Ende (2a) des Ringkanals (2) mit einer Milchleitung (11) verbunden ist, um dem Dampfkanal (1) der Erhitzereinheit über die Dampfzufuhrleitung (12) ein Dampf-Luftgemisch und dem Ringkanal (2) über die Milchleitung (11) Milch zuzuführen.

12. Vorrichtung nach Anspruch 11, **gekennzeichnet durch** eine Einrichtung (20) zur Erzeugung eines Dampf-Luftgemischs, welche einen Dampferzeuger (18) und eine Druckgasquelle (19) umfasst, die jeweils mit der Dampfzufuhrleitung (12) in Verbindung stehen, wobei der Dampferzeuger (18) die Dampfzufuhrleitung (12) mit Dampf beaufschlagt und die Druckgasquelle (19) Druckpulse erzeugt und in die Dampfzufuhrleitung (12) einleitet.

13. Vorrichtung nach Anspruch 12, **dadurch gekennzeichnet, dass** die Druckgasquelle (19) pulsweitenmoduliert angesteuert ist und/oder die Druckpulse in einer einstellbaren Pulsfrequenz (f) ausgibt.

14. Verfahren zur Erhitzung und/oder Aufschäumung von Milch mit einer Erhitzereinheit nach einem der Ansprüche 1 bis 10, wobei dem stromaufwärtigen Ende (1a) des Dampfkanals (1) heißer Dampf oder ein Dampf-Luftgemisch und dem stromaufwärtigen Ende (2a) des Ringkanals (2) Milch zugeführt wird und der Dampf oder das Dampf-Luftgemisch durch den Dampfkanal (1) und von dort in den Ablaufkanal (3) strömt und die Milch durch den Ringkanal (2) und von dort ebenfalls in den Ablaufkanal (3) strömt und sich dort mit dem Dampf oder dem Dampf-Luftgemisch vermischt, wodurch die Milch erhitzt und/oder aufgeschäumt wird, und wobei mit dem in dem Ablaufkanal (3) angeordneten Temperatursensor (6) die Temperatur der erhitzten und/oder der aufgeschäumten Milch erfasst wird.

## Claims

1. Heater unit for a device for heating and/or frothing milk, in which steam or a steam-air mixture as a heat carrier is introduced into the milk, wherein the heater unit has an inner steam channel (1) and an outer annular channel (2) surrounding it coaxially for the milk, wherein hot steam or a steam-air mixture is supplied at an upstream end (1a) of the steam channel (1) and milk is supplied at an upstream end (2a) of the annular channel (2), wherein the steam channel (1) and the annular channel (2) open respectively at their downstream end (1b, 2b) into a discharge channel (3) for removing the heated and/or frothed milk, **characterised in that** a temperature sensor (6) for recording the temperature of the heated and/or the frothed milk is arranged in the discharge channel (3).

2. Heater unit according to claim 1, **characterised in that** the steam channel (1), the annular channel (2) and the discharge channel (3) are formed in a reactor block (4) made of plastic.

3. Heater unit according to claim 2, **characterised in that** the steam channel (1) runs in the reactor block (4) in axial direction, wherein the upstream end (1a) of the steam channel (1) is connectable to a steam pipe and the steam introduced via the steam pipe or the steam-air mixture introduced via the steam pipe in the steam channel (1) flows vertically counter to the gravitational force from bottom to top to the downstream end (1b) of the steam channel (1).

4. Heater unit according to claim 2 or 3, **characterised in that** the reactor block (4) is designed to be at least substantially cylindrical with a central longitudinal axis (A), wherein the steam channel (1) and the discharge channel (3) run along the central longitudinal axis (A) of the reactor block (4), the annular channel (2) is arranged coaxially to the central longitudinal axis (A) of the reactor block (4) and the upstream end (1a) of the steam channel (1) is formed by an end face-side opening (4a) in the reactor block (4).

5. Heater unit according to one of the preceding claims, **characterised in that** the annular channel (2) is connected at its upstream end (2a) to a radial bore (5) running transversely or obliquely to the longitudinal axis of the annular channel (2) in the reactor block (4), wherein the radial bore (5) is connectable to a milk pipe.

6. Heater unit according to claim 5, **characterised in that** the radial bore (5) opens tangentially into the annular channel (2).

7. Heater unit according to one of the preceding claims, **characterised in that** the annular channel (2) at its downstream end (2b) has a conical section (2c) which opens into the discharge channel (3).

8. Heater unit according to claim 7, **characterised in that** the conical section (2c) of the annular channel (2) merges into the discharge channel (3) designed like a pipe in downstream direction.

9. Heater unit according to one of claims 2 to 8, **characterised by** an end face-side opening (4b) at the upper end of the reactor block (4) which forms an outlet for removing the heated and/or frothed milk from the discharge channel (3).

10. Heater unit according to one of the preceding claims, **characterised in that** the steam channel (1) and the annular channel (2) are separated from one another except at their downstream end (1b, 2b).

11. Device for heating and/or frothing milk having a heater unit according to one of the preceding claims, wherein the upstream end (1a) of the steam channel (1) is connected to a steam supply pipe (12) and the upstream end (2a) of the annular channel (2) is connected to a milk pipe (11) in order to supply a steam-air mixture to the steam channel (1) of the heater unit via the steam supply pipe (12) and milk to the annular channel (2) via the milk pipe (11).

12. Device according to claim 11, **characterised by** a device (20) for generating a steam-air mixture, which comprises a steam generator (18) and a compressed gas source (19), which are connected respectively to the steam supply pipe (12), wherein the steam generator (18) exposes the steam supply pipe (12) to steam and the compressed gas source (19) generates pressure pulses and introduces them into the steam supply pipe (12).

13. Device according to claim 12, **characterised in that** the compressed gas source (19) is actuated modulated according to pulse width and/or emits the pressure pulses at an adjustable pulse frequency (f).

14. Method for heating and/or frothing milk using a heater unit according to one of claims 1 to 10, wherein hot steam or a steam-air mixture is supplied to the upstream end (1a) of the steam channel (1) and milk is supplied to the upstream end (2a) of the annular channel (2) and the steam or the steam-air mixture flows through the steam channel (1) and from there into the discharge channel (3) and the milk flows through the annular channel (2) and from there likewise into the discharge channel (3) and is mixed there with the steam or the steam-air mixture, whereby the milk is heated and/or frothed, and wherein the temperature of the heated and/or the frothed milk is recorded using the temperature sensor (6) arranged in the discharge channel (3).

## Revendications

1. Unité formant réchauffeur pour un dispositif servant à réchauffer et/ou à faire mousser du lait, dans lequel de la vapeur ou un mélange de vapeur et d'air est acheminé dans le lait en tant que caloporteur, dans laquelle l'unité formant réchauffeur présente un canal de vapeur intérieur (1) et un canal annulaire (2) extérieur entourant celui-ci de manière coaxiale pour le lait, dans laquelle de la vapeur chaude ou un mélange de vapeur et d'air est amené au niveau d'une extrémité située en amont (1a) du canal de vapeur (1) et du lait est amené au niveau d'une extrémité située en amont (2a) du canal annulaire (2), dans laquelle le canal de vapeur (1) et le canal annulaire (2) débouchent respectivement au niveau de leur extrémité située en aval (1b, 2b) dans un canal d'évacuation (3) servant à évacuer le lait réchauffé et/ou moussé, **caractérisée en ce qu'**un capteur de température (6) servant à détecter la température du lait réchauffé et/ou moussé est disposé dans le canal d'évacuation (3).

2. Unité formant réchauffeur selon la revendication 1, **caractérisée en ce que** le canal de vapeur (1), le canal annulaire (2) et le canal d'évacuation (3) sont formés dans un bloc de réacteur (4) en matière plastique.

3. Unité formant réchauffeur selon la revendication 2, **caractérisée en ce que** le canal de vapeur (1) s'étend dans une direction axiale dans le bloc de réacteur (4), dans laquelle l'extrémité située en amont (1a) du canal de vapeur (1) peut être reliée à un conduit de vapeur et la vapeur introduite par l'intermédiaire du conduit de vapeur ou le mélange de vapeur et d'air introduit par l'intermédiaire du conduit de vapeur circule dans le canal de vapeur (1) de manière verticale à l'encontre de la force de gravité depuis le bas vers le haut vers l'extrémité située en aval (1b) du canal de vapeur (1).

4. Unité formant réchauffeur selon la revendication 2 ou 3, **caractérisée en ce que** le bloc de réacteur (4) est réalisé au moins sensiblement de manière cylindrique avec un axe longitudinal médian (A), dans laquelle le canal de vapeur (1) et le canal d'évacuation (3) s'étendent le long de l'axe longitudinal médian (A) du bloc de réacteur (4), le canal annulaire (2) est disposé de manière coaxiale par rapport à l'axe longitudinal médian (A) du bloc de réacteur (4) et l'extrémité située en amont (1a) du canal de vapeur (1) est formée par une ouverture côté frontal (4a) dans le bloc de réacteur (4).

5. Unité formant réchauffeur selon l'une quelconque des revendications précédentes, **caractérisée en ce que** le canal annulaire (2) est relié au niveau de son extrémité située en amont (2a) à un alésage radial (5), s'étendant de manière transversale ou de manière oblique par rapport à l'axe longitudinal du canal annulaire (2) dans le bloc de réacteur (4), dans laquelle l'alésage radial (5) peut être relié à un conduit de lait.

6. Unité formant réchauffeur selon la revendication 5, **caractérisée en ce que** l'alésage radial (5) débouche de manière tangentielle dans le canal annulaire (2).

7. Unité formant réchauffeur selon l'une quelconque des revendications précédentes, **caractérisée en ce que** le canal annulaire (2) présente au niveau de son extrémité située en aval (2b) une section conique (2c), qui débouche dans le canal d'évacuation (3).

8. Unité formant réchauffeur selon la revendication 7, **caractérisée en ce que** la section conique (2c) du canal annulaire (2) est en continuité, dans une direction en aval, avec le canal d'évacuation (3) réalisé de manière tubulaire.

9. Unité formant réchauffeur selon l'une quelconque des revendications 2 à 8, **caractérisée par** une ouverture côté frontal (4b) au niveau de l'extrémité supérieure du bloc de réacteur (4), laquelle forme une sortie servant à évacuer le lait réchauffé et/ou moussé hors du canal d'évacuation (3).

10. Unité formant réchauffeur selon l'une quelconque des revendications précédentes, **caractérisée en ce que** le canal de vapeur (1) et le canal annulaire (2) sont séparés l'un de l'autre à part au niveau de leur extrémité située en aval (1b, 2b).

11. Dispositif servant à réchauffer et/ou à faire mousser du lait avec une unité formant réchauffeur selon l'une quelconque des revendications précédentes, dans lequel l'extrémité située en amont (1a) du canal de vapeur (1) est reliée à un conduit d'amenée de vapeur (12) et l'extrémité située en amont (2a) du canal annulaire (2) est reliée à un conduit de lait (11) pour amener un mélange de vapeur et d'air au canal de vapeur (1) de l'unité formant réchauffeur par l'intermédiaire du conduit d'amenée de vapeur (12) et du lait au canal annulaire (2) par l'intermédiaire du conduit de lait (11) .

12. Dispositif selon la revendication 11, **caractérisé par** un système (20) servant à produire un mélange de vapeur et d'air, lequel comprend un générateur de vapeur (18) et une source de gaz sous pression (19), qui sont en liaison respectivement avec le conduit d'amenée de vapeur (12), dans lequel le générateur de vapeur (18) soumet le conduit d'amenée de vapeur (12) à l'action de la vapeur et la source de gaz sous pression (19) génère des impulsions de pression et les achemine dans le conduit d'amenée de vapeur (12).

13. Dispositif selon la revendication 12, **caractérisé en ce que** la source de gaz sous pression (19) est pilotée de manière modulée en largeur d'impulsions et/ou délivre les impulsions de pression dans une fréquence d'impulsion (f) pouvant être réglée.

14. Procédé servant à réchauffer et/ou à faire mousser du lait avec une unité formant réchauffeur selon l'une quelconque des revendications 1 à 10, dans lequel de la vapeur chaude ou un mélange de vapeur et d'air est amené à l'extrémité située en amont (1a) du canal de vapeur (1) et du lait est amené à l'extrémité située en amont (2a) du canal annulaire (2), et la vapeur ou le mélange de vapeur et d'air s'écoule à travers le canal de vapeur (1) et de là dans le canal d'évacuation (3) et le lait s'écoule à travers le canal annulaire (2) et de là également dans le canal d'évacuation (3) et s'y mélange à la vapeur ou au mélange de vapeur et d'air, ce qui permet de réchauffer et/ou de faire mousser le lait, et dans lequel la température du lait réchauffé et/ou moussé est détectée avec le capteur de température (6) disposé dans le canal d'évacuation (3).
